# EUROPÄISCHE PATENTSCHRIFT

(11) **EP 0 757 703 B1**
(45) Veröffentlichungstag und Bekanntmachung des Hinweises auf die Patenterteilung: **11.08.1999**
(21) Anmeldenummer: 95916617.4
(22) Anmeldetag: 08.04.1995
(51) Int. Cl.: C08J 5/18, B65D 75/36, C08K 3/00, C08L 23/12

(54) **Verwendung einer Folie zur Herstellung von Blisterverpackungen**
Use of a foil for the production of blister packs
Utilisation d'un film pour la fabrication d'un emballage en blister

(30) Priorität: 27.04.1994 DE 4414669
(43) Veröffentlichungstag der Anmeldung: 12.02.1997
(73) Patentinhaber: BP Chemicals PlasTec GmbH, 89165 Dietenheim (DE); Borealis AG, 2323 Schwechat-Mannswörth (AT)
(72) Erfinder: SCHNÄBELE, Jürgen, D-82347 Bernried (DE); SCHMIDT, Norwin, D-89233 Neu-Ulm (DE); LÜDEMANN, Henning, D-87700 Memmingen (DE); WOLFSBERGER, Anton, A-4020 Linz (AT); GRÜNBERGER, Manfred, A-4050 Traun (AT)
(74) Vertreter: Hoeger, Stellrecht & Partner
(86) Internationale Anmeldenummer: EP9501297
(87) Internationale Veröffentlichungsnummer: WO9529202

(56) Entgegenhaltungen:
- EP-A- 0 613 832
- EP-A- 0 659 815
- DE-A- 4 236 450
- DATABASE WPI Section Ch, Week 9516 Derwent Publications Ltd., London, GB; Class A92, AN 95-118517 & JP-A-07 041 044 ( IDEMITSU PETROCHEM CO) , 10.Februar 1995

## Beschreibung

Die Erfindung betrifft eine Verwendung einer Folie mit einer Kunststoffmatrix aus Polypropylen, gefüllt mit einem partikelförmigen Füllstoff, zur Herstellung von Blisterpackungen, insbesondere für die manipulationssichere Abdeckung solcher Blisterpackungen.

Bekannte Folien für Blister-Abdeckungen bestehen bislang aus Aluminiumfolien, kunststoffbeschichteten Aluminiumfolien bis zu reinen transparenten oder opaken Kunststoffolien. Diese Folien bilden das Gegenstück zu dem Warenträger oder dem sogenannten Unterteil der Verpackung, das wiederum aus einer Vielzahl von Materialien gebildet sein kann, beispielsweise aus einer stabilen Kartonlage, einer an die Form der Ware angepaßten Kunststoff- oder Aluminiumschale oder dergleichen.

Bei der Verwendung von Kunststoffolien als Blister-Abdeckung bestand bisher das Problem, daß insbesondere druckempfindliche Waren nicht durch die Folie hindurch gedrückt und so der Verpackung entnommen werden konnten, ohne daß dies zu einer Beschädigung der Waren, insbesondere bei Tabletten, geführt hätte.

Deshalb wurde bei der Verwendung von Folien als Abdeckteil für solche Verpackungen entweder auf Aluminiumfolien zurückgegriffen, wie dies insbesondere bei der Verpackung von pharmazeutischen Produkten, wie z.B. Tabletten, Ampullen oder Kapseln, der Fall ist, oder aber es wurde im Unterteil der Verpackung eine Entnahmemöglichkeit vorgesehen.

Aufgabe der vorliegenden Erfindung ist es, zur Herstellung von Blisterpackungen eine Folie zu verwenden, welche sich aus Kunststoff herstellen läßt, trotzdem die bekannten Durchdrückeigenschaften von Aluminiumfolienabdeckungen zeigt und für einen hinreichend schnellen Siegelvorgang geeignet ist.

Diese Aufgabe wird bei der eingangs beschriebenen Folie erfindungsgemäß dadurch gelöst, daß zur Herstellung von Blisterpakkungen eine Folie verwendet wird, welche eine Durchdrückfolie mit einer Durchstoßfestigkeit, gemessen an einer 150 µm dicken Folie, von weniger als 450 N/mm ist und bei welcher die Polypropylenmatrix von einem hochkristallinen Polypropylen gebildet wird.

Dieser Grenzwert gilt für ca. 150 µm dicke Folien. Für deutlich dünnere oder dickere Folien lassen sich von diesen Werten die entsprechenden Grenzwerte ableiten. Bei dem angegebenen Grenzwert ist es möglich, druckunempfindliche Waren durch die Abdeckfolie des Warenträgers durchzudrücken, wenn auch noch mit einigem Kraftaufwand. Bei empfindlicheren Produkten wird man vorzugsweise einen geringeren Grenzwert für die Durchstoßfestigkeit wählen, und bevorzugt liegt dieser Wert dann bei ca. 100 bis ca. 200 N/mm. Geringere Durchstoßfestigkeiten mögen sich in einzelnen Fällen empfehlen, wo sehr drucksensitive Waren verpackt sind. Allerdings ist dabei zu beachten, daß selbstverständlich mit der Herabsetzung der Durchstoßfestigkeit auch die Schutzwirkung der Verpackung gegen Beschädigung der Waren selbst abnimmt, so daß in dem zuvor angegebenen Zahlenbereich von ca. 100 bis ca. 200 N/mm in vielen Fällen ein Optimum zu sehen ist.

Dünne Schichten aus Polypropylen mit einem Füllstoffgehalt von 10 bis 60 Gew.% eines anorganischen Füllstoffs sind an sich aus der JP-A-61-248793 bekannt. Der dort beschriebene Verwendungszweck betrifft ein adhäsives Material, welches sich zur Bildung von Masken für die Herstellung elektronischer Bauteile eignet oder auch zum Lackieren von Kraftfahrzeugen. Diese dünnen Schichten aus Polypropylen weisen eine verbesserte Luftdurchlässigkeit auf.

Für die Handhabung der Verpackung durch den Verbraucher, d.h. insbesondere beim Öffnen der Verpackung und damit der Ware, kommt in zweiter Linie eine weitere Eigenschaft ins Spiel, die sogenannte Weiterreißfestigkeit, die den Kraftaufwand bestimmt, der notwendig ist, um eine einmal durchgestoßene Folie weiter aufreißen zu lassen und so das Produkt freizugeben. Auch diese Eigenschaft läßt sich durch die Wahl des Füllstoffes sowie dessen Anteil in der Kunststoffmatrix beeinflussen, wobei hier vorzugsweise eine Weiterreißfestigkeit von weniger als 30 N (Meßmethode nach DIN 53363) angestrebt wird. Dieser Zahlenwert gilt insbesondere für ca. 150 µm dicke Folien, läßt sich aber im wesentlichen auch auf wesentlich dünnere bzw. dickere Folien anwenden. Ein für die Handhabung, insbesondere auch von druckempfindlichen Gütern, akzeptabler Wert der Weiterreißfestigkeit liegt zwischen ca. 2 bis 12 N, wobei auch hier wiederum zu beachten ist, daß natürlich wesentlich geringere Werte möglich sind, aber im Hinblick auf den Schutz der Ware durch die Folie einer beliebigen Verringerung Grenzen gesetzt sind. Ein bevorzugter Bereich für die Weiterreißfestigkeit liegt im Bereich von 3 bis 4 N.

Die Folie enthält den Füllstoff als homogene Zumischung zu einem bereits fertig auspolymerisierten Kunststoffmaterial. Der Füllstoff wird also nicht - wie dies im Zusammenhang mit Füllstoffverstärkten Kunststoffen bekannt ist - in der Polymerisationsreaktionsmischung aus Monomer und/oder Präpolymer dispergiert und während des Aushärtens der Reaktionsmischung in die Kunststoffmatrix eingebaut. Selbstverständlich ist es aber denkbar, solches verstärktes Kunststoffmaterial als Kunststoffmatrix in bestimmten Anwendungsfällen auch im Zusammenhang mit der vorliegenden Erfindung zu benutzen.

Für die Füllstoffe der Folie steht eine breite Palette an Füllstoffen zur Verfügung. Diese können aus anorganischen und/oder organischen Substanzen ausgewählt sein.

Bevorzugte Beispiele für die organischen Substanzen sind z.B. halogenierte Kohlenwasserstoffpolymere, insbesondere PTFE, Polyethersulfone, Cellulosefasern, Holzschliff o.ä., die wie das PTFE einen Fixpunkt von > 300° C aufweisen, sowie duroplastische Kunststoffe. Bei den organischen Substanzen, die als Füllstoffe dienen sollen, ist wichtig, daß sich diese bei der Verarbeitung des Kunststoffmatrixmaterials, bei der Temperaturen von 220° C und mehr auftreten können, nicht verflüssigen und dann eine homogene Lösung mit dem Kunststoffmatrixmaterial bilden, sondern daß diese im wesentlichen in Partikelform in der Kunststoffmatrix während der Verarbeitung erhalten bleiben und so einer Schwächung der durchgehenden Kunststoffmatrixschicht und damit der entsprechenden Herabsetzung der Durchstoßfestigkeit und gegebenenfalls der Weiterreißfestigkeit dienen.

Für die anorganische Komponente des Füllstoffs kann die Substanz ausgewählt werden aus der Reihe der Siliciumdioxide, insbesondere in Form von Glas oder Quarz, Silikate, insbesondere in Form von Talkum, Titanate, TiO₂, Aluminiumoxid, Kaolin, Calciumkarbonate, insbesondere in Form von Kreide, Magnesite, MgO, Eisenoxide, Siliciumcarbide, Siliciumnitride, Bariumsulfat.

Bei der Auswahl der anorganischen oder organischen Substanzen als Komponenten des Füllstoffs wird stets auch das zu verpackende Gut zu berücksichtigen sein und dessen Empfindlichkeit auf den einen oder anderen Zusatzstoff zu der Polymermatrix.

Die Form der Füllstoffpartikel wird wohl am häufigsten granular sein, aber auch plättchenförmige, faserförmige oder stabförmige Füllstoffpartikel sind sowohl als im wesentlichen einheitliche Form oder auch in Mischung mit anderen Formen als Füllstoffpartikel möglich.

Die Partikelgröße des Füllstoffes (gemessen über die größte Ausdehnung des Partikels) beträgt bevorzugt im Mittel ca. 5 bis ca. 100 µm. Die Wahl der Partikelgröße ist selbstverständlich nicht unwesentlich mitbestimmt von der herzustellenden Folienschichtdicke. So wird darauf zu achten sein, daß die mittlere Ausdehnung der Partikel einen deutlichen Abstand zu der herzustellenden Foliendicke hält. Bevorzugt werden mittlere Partikelgrößen zwischen 20 µm und 60 µm, insbesondere bei Foliendicken von 80 µm bis 100 µm.

Um sicherzustellen, daß der Füllstoff nicht zu einer Verstärkung der Polymermatrix führt, sollte darauf geachtet werden, daß die Füllstoffpartikel eine möglichst geringe Haftung an der Polymermatrix aufweisen. Mindestens jedoch sollten die Haftkräfte zwischen den Partikeln und der Füllstoffmatrix deutlich geringer sein als die Zugfestigkeit der Matrix selbst. So wird insbesondere bei den anorganischen Füllstoffpartikeln darauf zu achten sein, daß diese im wesentlichen frei von sogenannten Haftvermittlern sind. Solche Haftvermittler werden üblicherweise bei der Herstellung von gefüllten Kunststoffen verwendet, bei denen aber auf die besondere Festigkeit des Materials abgestellt wird.

Andererseits soll natürlich erreicht werden, daß die Füllstoffpartikel eine möglichst gleichmäßige Verteilung in der Kunststoffmatrix erhalten und auch beim Produktionsprozeß beibehalten, so daß man bevorzugt Hilfsmittel zugibt, welche die Dispergierbarkeit der Füllstoffpartikel in der Matrix verbessern.

Als Dispergierhilfsmittel eignen sich insbesondere niedrigschmelzende organische Substanzen, welche eine große Benetzungsfähigkeit für den Füllstoff aufweisen. Konkrete Beispiele sind niedermolekulare Polyolefinwachse. Die Dispergierhilfsmittel werden bevorzugt auf die Füllstoffpartikel aufgebracht, bevor diese mit dem Granulat des Matrixkunststoffs vermischt, insbesondere geknetet werden.

Die Dicke der Folie wird bevorzugt von 20 µm bis ca. 600 µm gewählt, was zum einen eine ausreichende Stabilität der Folie zum Schutz der verpackten Waren sicherstellt und zum anderen die für das Öffnen der Verpackung notwendigen Kräfte innerhalb des vorgegebenen Limits hält, innerhalb dessen zumindest druckinsensitive Waren noch vom Durchschnittskäufer problemlos aus der Verpackung durch Durchdrücken der Abdeckfolie entnommen werden können.

Insbesondere bei der Verpackung von Pharmazeutika ist es häufig erwünscht, daß die Folie im wesentlichen wasser- dampfundurchlässig ausgebildet ist.

Als geeignete Kunststoffmatrix-Materialien haben sich insbesondere hochkristalline Polypropylene, wie sie in der EP 0 255 693 B1 beschrieben werden, mit hohem isotaktischem Pentadenanteil, zwischen 0,955 und 1,0 empfohlen. (Meßmethode in der EP 0 255 693 B1 beschrieben.)

Das mittlere Molekulargewicht der Polymeren in der Kunststoffmatrix wird vorzugsweise im Bereich von ca. 10 000 bis ca. 600 000 gewählt.

Der Elastizitätsmodul (gemessen nach DIN 53457 an 50 µm dicken Folien) beträgt vorzugsweise 1200 - 1400 N/mm² für das reine einzusetzende Polypropylen. Bei der gefüllten Polypropylenmatrix kann der Elastizitätsmodul ansteigen, beispielsweise auf Werte (in N/mm²) von 1800 - 2000 bei 5 Gew.% Talkumfüllung, 2200 - 2400 bei 10 Gew.% Talkumfüllung oder 3000 - 3400 bei 20 Gew.% Talkumfüllung.

Bei den bislang beschriebenen Folien wurde allein durch die Zugabe der Füllstoffe zu der Kunststoffmatrix für eine verbesserte Durchstoßfestigkeit bzw. Weiterreißfestigkeit derselben gesorgt.

Bei größeren Verpackungseinheiten, bei der eine Vielzahl von Produkten separat voneinander auf einem Warenträger gelagert und durch die Abdeckfolie abgedeckt ist, ist es häufig wünschenswert, daß die einzelnen Waren getrennt voneinander aus dem Warenträger entnommen werden können, ohne daß die Verpackung der daneben liegenden Einzelwaren beschädigt wird.

Je nach Beschaffenheit des Unterteils der Verpackung kann bereits die normale Siegelfestigkeit ausreichen, um das oben genannte Problem zu lösen. Sollte jedoch in einem direkten Kontakt der Folie mit dem Unterteil eine zu geringe Siegelfestigkeit erhalten oder zu lange Siegelzeiten notwendig werden, kann sich die Notwendigkeit einer zusätzlichen Siegelschicht auf der Folienoberfläche ergeben.

Um die durch die ursprüngliche Folie vorgegebene Durchstoßfestigkeit und die Weiterreißfestigkeit jedoch im wesentlichen zu erhalten, wird bei solchen Warenverpackungen vorgesehen, daß die Siegelschicht eine Mischung eines (A) Polypropylen-Copolymeren mit einem Ethylenanteil von ca. 4 bis 12 mol% und einem Polymeren (B) umfaßt, ausgewählt aus der Reihe EVA-Copolymer mit bis zu 18 mol% Vinylacetatanteil, Ionomere, Ethylen-Ethylacrylatcopolymere, Ethylen-Methacrylat-Copolymere, Maleinsäureanhydrid gepfropfte Polypropylene und Polyethylene, deren Copolymere sowie EVA-Copolymere.

Das Mischungsverhältnis der Mischungskomponente (A) zur Mischungskomponente (B) kann in einem weiten Bereich von 5:95 bis 95:5 variiert werden, wobei über die Komponente (B) das Temperaturverhalten der Mischung steuerbar ist und insbesondere eine einfache Anpassung der Siegelschicht an geeignete Siegeltemperaturen und Siegeltaktzeiten zuläßt.

Optimale Siegeltemperaturen liegen im Temperaturbereich von 145 bis 155° C.

Die erfindungsgemäße Siegelschicht ist nicht nur für die oben beschriebenen Durchdrückfolien auf der Basis einer Polypropylen-Matrix aus hochkristallinem Polypropylen geeignet, sondern generell für jede Art Durchdrückfolie, welche die oben angegebenen Spezifikationen für die Durchstoßfestigkeit enthält. Hierbei sind insbesondere Kunststoffmatrix-Materialien zu erwähnen, wie Polyolefine allgemein, PVC, Polyester, Polystyrol oder Styrolcopolymerisate, die anstelle des eingangs erwähnten hochkristallinen Polypropylens treten.

Weiter bevorzugte Mischungsverhältnisse der Mischungskomponenten (A) und (B) liegen bei 35:65 bis 65:35. Sehr gute Siegelergebnisse werden mit Mischungsverhältnissen von ca. 50:50 erhalten.

Die Komponente (A) wird bevorzugt mit einem Ethylenanteil von 6 - 10 mol% eingesetzt, meist bevorzugt mit einem 8 mol%-Anteil.

Durch eine gezielte Erhöhung der Abkühltemperatur der Kühlwalze(n) kann bei der Herstellung der Folie die Durchstoßfestigkeit und Weiterreißfestigkeit zusätzlich herabgesetzt werden. Hierbei wird die Abkühlung der Folie vorzugsweise an Abkühlwalzen mit Temperaturen zwischen 20 und 100°C, weiter bevorzugt zwischen 50 und 80°C, vorgenommen. Hierbei kann dann durch den Einsatz des Kalanderverfahrens die zusätzliche Herabsetzung der Durchstoß- und Weiterreißfestigkeit erzielt werden.

Das erfindungsgemäße Siegelschichtmaterial eignet sich zudem hervorragend als Siegelschicht auf Tiefziehfolien, aus denen in der Regel die Warenträger oder Unterteile der Blisterpackungen gefertigt werden.

Es empfiehlt sich, dieselbe Siegelschicht auf der mit dem Warenträger zu kombinierenden Durchdrückfolie aufzubringen, so daß beim Siegelvorgang die Siegelschicht der Durchdrückfolie mit der Siegelschicht der Tiefziehfolie verbunden wird.

Bei der besonders bevorzugten Ausführungsform der Erfindung ist die Folie zwei- oder mehrlagig aufgebaut, wobei die zwei oder mehreren Lagen der Folie vorzugsweise koextrudiert hergestellt sind.

Die Erfindung betrifft weiterhin die Verwendung einer Folie zur Herstellung von Blisterpackungen in Form einer Verpackung mit einem gegebenenfalls an die zu verpackenden Waren in der Form angepaßten Unterteil als Warenträger und einem Oberteil aus einer oben bereits beschriebenen Folie.

Bevorzugt wird bei einer solchen Verpackung das Unterteil und das Oberteil unter Verwendung derselben Kunststoffart hergestellt, so daß man ein sortenreines Produkt erhält. Solche sortenreinen Produkte sind insbesondere leicht recyclebar und für denselben Verwendungszweck wiederverwendbar, was ein Optimum im Verpackungskreislauf darstellt.

Eine Verwendung der Verpackung besteht in der Verpackung von Pharmazeutika, die insbesondere in Ampullen-, Kapsel- oder Tablettenform vorliegen.

Die Erfindung sei im folgenden anhand eines Beispiels noch näher erläutert:

Beim ersten Schritt wird ein Polymergranulat mit den Füllstoffanteilen vermischt und nachfolgend extrudiert oder kalandriert. Die Vermischung, insbesondere die Homogenisierung, kann durch Kneten nach bekannten Verfahren, insbesondere der Doppelschneckencompoundierung, erfolgen. Die Einzelkomponenten können aber auch in einem Trockenmischverfahren miteinander vermischt werden. Eine bessere Homogenität, d.h. eine gleichmäßigere Verteilung der Füllstoffe in der Polymermatrix, wird durch die vorgeschaltete Herstellung eines sogenannten Compounds erreicht.

Eine Behandlung der Füllstoffpartikel mit Dispergierhilfsmitteln sollte in jedem Fall vor der Vermengung mit dem Matrix-Kunststoff erfolgen.

Das Compound wird im Extruder geschmolzen, und zwar bei Massetemperaturen von ca. 220° C und mehr sowie bei einem Massedruck von bis zu 250 bar. Die Abkühlung der Schmelze erfolgt vorzugsweise über eine Chill-roll bei 20° C bis ca. 40° C, aber auch andere Abkühlverfahren, gegebenenfalls mit einer Oberflächenbehandlung mit Corona-Entladung kombiniert, sind möglich.

Danach werden die Folien beschnitten und gewickelt.

Als Beispiel für das Polymer der Kunststoffmatrix sei ein hochkristallines Polypropylen mit einem Schmelzindex von ca. 8 g/10 min nach DIN 53735 (230° C/2, 16 kg) und einer Dichte (23° C) nach DIN 53479 von 0,902 g/cm³ erwähnt. Selbstverständlich können auch hiervon verschiedene Polypropylen-Typen verwendet werden.

Als Füllstoff sei für dieses Beispiel Kreide oder Talkum vorgeschlagen mit einer mittleren Teilchengröße von 5 bis 60 µm, besser noch mit einer mittleren Teilchengröße von 20 bis 30 µm. Der Anteil der Füllstoffe an dem Gesamtfoliengewicht beträgt bevorzugt von 10 bis 55 Gew.%. Unterhalb von einem Füllstoffanteil von 5 Gew.% erhält man regelmäßig keine ausreichende Versprödung des Kunststoffs mit der damit zusammenhängenden Absenkung der Durchstoßfestigkeit und der Weiterreißfestigkeit mehr. Bei Anteilen deutlich über 60 Gew.% gestaltet sich die Folienherstellung schwierig und die physikalischen Festigkeitswerte sind dann häufig für die typischen Verwendungszwecke nicht mehr ausreichend.

Wie bei der Produktion von Propylen-Folien üblich, wird auch bei der erfindungsgemäßen Folie auf Polypropylen-Basis eine Umspulung aus Gründen der Nachkristallisation vorgenommen. (Die Dauer der Nachkristallisation beträgt typischerweise 4 bis 10 Tage.)

Mit einer Mischung aus
- 95 Gew.%: Polypropylen, hochkristallin, der Firma Mitsui mit der Produktbezeichnung CJ700,
und
- 5 Gew.%: Talkum als Füllstoff, mittlere Teilchengröße 20 µm wurde eine 150 µm dicke Folie hergestellt (Dichte 0,93 g/cm³).

An dieser Folie konnte eine Durchstoßfestigkeit von 360 N/mm und eine Schädigungsarbeit gemäß DIN 53373 von 0,5 J/mm gemessen werden.

Aus einer Mischung von
- 90 Gew.%: Polypropylen, hochkristallin, der Firma Mitsui mit der Produktbezeichnung CJ700,
und
- 10 Gew.%: Talkum als Füllstoff, mittlere Teilchengröße 20 µm wurde eine 150 µm dicke Folie hergestellt (Dichte 0,965 g/cm³).

An dieser Folie konnte eine Durchstoßfestigkeit von 220 N/mm und eine Schädigungsarbeit von 0,2 J/mm gemessen werden.

Stellt man die Mischung auf 80 Gew.% Polypropylen (Spezifikation siehe oben) und 20 Gew.% Talkum (Spezifikation siehe oben) ein, erhält man eine Durchstoßfestigkeit von ca. 100 N/mm sowie eine Schädigungsarbeit von 0,05 J/mm. Die Dichte des Materials wurde zu 1,04 g/cm³ bestimmt.

## Patentansprüche

1. Verwendung einer Folie mit einer einen partikelförmigen Füllstoff enthaltenden Polypropylenmatrix zur Herstellung von Blisterpackungen, wobei die Folie eine Durchdrückfolie mit einer Durchstoßfestigkeit, gemessen an einer 150 um dicken Folie, von weniger als 450 N/mm ist und wobei die Polypropylenmatrix von einem hochkristallinen Polypropylen gebildet wird.

2. Verwendung nach Anspruch 1, dadurch gekennzeichnet, daß die Auswahl des Füllstoffs so getroffen und der Anteil des Füllstoffs so gewählt ist, daß die Weiterreißfestigkeit unter einen Grenzwert von 30 N herabgesetzt ist.

3. Verwendung nach Anspruch 1 oder 2, dadurch gekennzeichnet, daß der Wert der Durchstoßfestigkeit 100 bis 200 N/mm beträgt.

4. Verwendung nach Anspruch 2 oder 3, dadurch gekennzeichnet, daß der Wert der Weiterreißfestigkeit 3 bis 4 N beträgt.

5. Verwendung nach einem der Ansprüche 1 bis 4, dadurch gekennzeichnet, daß der Füllstoff eine Komponente in Form einer anorganischen und/oder organischen Substanz umfaßt.

6. Verwendung nach Anspruch 5, dadurch gekennzeichnet, daß der Füllstoff als organische Substanz halogenierte Kohlenwasserstoffpolymere, Polyethersulfone, Cellulose, Holzschliff und/oder duroplastische Kunststoffe umfaßt.

7. Verwendung nach Anspruch 5 oder 6, dadurch gekennzeichnet, daß die anorganische Komponente eine Substanz ausgewählt aus der Reihe SiO₂, Silikate, Titanate, TiO₂, Aluminiumoxid, Kaolin, Calciumkarbonate, Magnesite, MgO, Eisenoxide, Siliciumcarbide, Siliciumnitride, Bariumsulfat enthält.

8. Verwendung nach einem der voranstehenden Ansprüche, dadurch gekennzeichnet, daß der Füllstoff granular, plättchenförmig, faserförmig oder stabförmig ist.

9. Verwendung nach einem der voranstehenden Ansprüche, dadurch gekennzeichnet, daß die Partikelgröße des Füllstoffes, gemessen über die größte Ausdehnung des Partikels, im Mittel 5 µm bis 100 µm beträgt.

10. Verwendung nach einem der voranstehenden Ansprüche, dadurch gekennzeichnet, daß der Füllstoffgehalt 5 Gew.% bis 60 Gew. % beträgt.

11. Verwendung nach einem der voranstehenden Ansprüche, dadurch gekennzeichnet, daß die Füllstoffpartikel im wesentlichen frei von Haftvermittlern sind.

12. Verwendung nach einem der voranstehenden Ansprüche, dadurch gekennzeichnet, daß die Füllstoffpartikel mit einem Hilfsmittel vorbehandelt sind, welches die Dispergierbarkeit der Füllstoffpartikel in der Matrix verbessert.

13. Verwendung nach einem der voranstehenden Ansprüche, dadurch gekennzeichnet, daß die Dicke der Folie 20 µm bis 600 µm beträgt.

14. Verwendung nach einem der voranstehenden Ansprüche, dadurch gekennzeichnet, daß die Folie im wesentlichen wasserdampfundurchlässig ist.

15. Verwendung nach einem der voranstehenden Ansprüche, dadurch gekennzeichnet, daß das Polypropylen der Kunststoffmatrix einen hohen isotaktischen Pentadenanteil aufweist.

16. Verwendung nach Anspruch 15, dadurch gekennzeichnet, daß der isotaktische Pentadenanteil zwischen 0,955 und 1 liegt.

17. Verwendung nach einem der voranstehenden Ansprüche, dadurch gekennzeichnet, daß das Polypropylen der Kunststoffmatrix ein mittleres Molekulargewicht von 10.000 bis 600 000 aufweist.

18. Verwendung nach einem oder mehreren der voranstehenden Ansprüche, dadurch gekennzeichnet, daß die Folie zwei- oder mehrlagig ist.

19. Verwendung nach Anspruch 18, dadurch gekennzeichnet, daß die zwei oder mehreren Lagen der Folie koextrudiert sind.

20. Verwendung nach einem der Ansprüche 18 oder 19, dadurch gekennzeichnet, daß eine außenliegende Folienlage eine Siegelschicht ist.

21. Verwendung nach Anspruch 20, dadurch gekennzeichnet, daß die Siegelschicht aus einem Material gebildet ist, welches eine Mischung aus zwei Polymerkomponenten umfaßt, wobei die erste Komponente (A) aus einem Polypropylencopolymeren mit einem Ethylenanteil von ca. 4 bis 12 mol% besteht und wobei die Komponente (B) ausgewählt ist aus der Reihe
EVA-Copolymer mit bis zu 18 mol% Vinylacetatanteil, Ionomere,
Ethylen-Ethylacrylatcopolymere,
Ethylen-Methylacrylatcopolymere,
Maleinsäureanhydrid gepfropfte Polypropylene und Polyethylene sowie EVA-Copolymere.

22. Verwendung nach Anspruch 21, dadurch gekennzeichnet, daß das Mischungsverhältnis der Komponenten (A) und (B) 5:95 bis 95:5 beträgt.

23. Verwendung nach Anspruch 22, dadurch gekennzeichnet, daß das Mischungsverhältnis der Komponenten (A) und (B) 35:65 bis 65:35 beträgt.

24. Verwendung nach Anspruch 21, dadurch gekennzeichnet, daß das Mischungsverhältnis der Komponenten (A) und (B) so eingestellt ist, daß eine Siegeltemperatur im Bereich von 145 bis 155° C erhalten wird.

25. Verwendung nach einem der Ansprüche 21 bis 24, dadurch gekennzeichnet, daß der Ethylenanteil der Komponente (A) 6 bis 10 mol% beträgt.

26. Verwendung nach einem oder mehreren der vorgenannten Ansprüche, dadurch gekennzeichnet, daß durch gezielte Erhöhung der Abkühltemperatur der Kühlwalze(n) die Durchstoßfestigkeit und Weiterreißfestigkeit zusätzlich herabgesetzt werden kann.

27. Verwendung nach Anspruch 26, dadurch gekennzeichnet, daß die Abkühlung der Folie an den Abkühlwalzen zwischen 20 und 100° C beträgt.

28. Verwendung nach einem oder mehreren der vorgenannten Ansprüche, dadurch gekennzeichnet, daß speziell durch den Einsatz des Kalanderverfahrens eine zusätzliche Herabsetzung der Durchstoß- und Weiterreißfestigkeit erzielt wird.

29. Verwendung einer Folie gemäß einem der Ansprüche 1 bis 28 zur Herstellung von Blisterpackungen in Form einer Verpackung mit einem an die zu verpackenden Waren in der Form angepaßten Unterteil als Warenträger und einem Oberteil.

30. Verwendung einer Folie gemäß einem der Ansprüche 1 bis 29, dadurch gekennzeichnet, daß das Unterteil und das Oberteil unter Verwendung desselben Kunststoffes hergestellt sind.

31. Verwendung einer Folie gemäß einem der Ansprüche 1 bis 30, dadurch gekennzeichnet, daß das Unterteil aus einer Tiefziehfolie hergestellt ist, welche eine Siegelschicht gemäß der Definition eines der Ansprüche 21 bis 25 aufweist.

32. Verwendung der Verpackung gemäß einem der Ansprüche 1 bis 31, dadurch gekennzeichnet, daß sie zur Verpackung von Pharmazeutika, insbesondere in Ampullen-, Kapsel- oder Tablettenform, geeignet ist.

## Claims

1. Use of a film with a polypropylene matrix containing a particulate filler for the production of blister packs, the film being a push-through film with a puncture resistance, measured on a film 150 µm thick, of less than 450 N/mm, and the polypropylene matrix being formed by a highly crystalline polypropylene.

2. Use as defined in claim 1, characterized in that the filler is chosen and the proportion of the filler selected such that the resistance to further tearing is reduced to below a limit of 30 N.

3. Use as defined in claim 1 or 2, characterized in that the value of the puncture resistance is 100 to 200 N/mm.

4. Use as defined in claim 2 or 3, characterized in that the value of the resistance to further tearing is 3 to 4 N.

5. Use as defined in any one of claims 1 to 4, characterized in that the filler comprises a component in the form of an inorganic and/or organic substance.

6. Use as defined in claim 5, characterized in that the filler comprises as organic substance halogenated hydrocarbon polymers, polyether sulfones, cellulose, wood pulp and/or thermoset plastics.

7. Use as defined in claim 5 or 6, characterized in that the inorganic component contains a substance selected from the family of SiO₂, silicates, titanates, TiO₂, aluminium oxide, kaolin, calcium carbonates, magnesites, MgO, iron oxides, silicon carbides, silicon nitrides, barium sulfate.

8. Use as defined in any one of the preceding claims, characterized in that the filler is granular, lamellar, fibrous or rod-shaped.

9. Use as defined in any one of the preceding claims, characterized in that the particle size of the filler, measured over the greatest extension of the particle, is on average 5 µm to 100 µm.

10. Use as defined in any one of the preceding claims, characterized in that the filler content is 5 % by weight to 60 % by weight.

11. Use as defined in any one of the preceding claims, characterized in that the filler particles are essentially free from coupling agents.

12. Use as defined in any one of the preceding claims, characterized in that the filler particles are pretreated with a supplementary agent for improving the dispersibility of the filler particles in the matrix.

13. Use as defined in any one of the preceding claims, characterized in that the thickness of the film is 20 µm to 600 µm.

14. Use as defined in any one of the preceding claims, characterized in that the film is essentially impermeable to steam.

15. Use as defined in any one of the preceding claims, characterized in that the polypropylene of the plastic matrix has a high isotactic pentad fraction.

16. Use as defined in claim 15, characterized in that the isotactic pentad fraction is between 0.955 and 1.

17. Use as defined in any one of the preceding claims, characterized in that the polypropylene of the plastic matrix has an average molecular weight of 10,000 to 600,000.

18. Use as defined in one or more of the preceding claims, characterized in that the film has two or more layers.

19. Use as defined in claim 18, characterized in that the two or more layers of the film are coextruded.

20. Use as defined in either of claims 18 or 19, characterized in that an external film layer is a sealing layer.

21. Use as defined in claim 20, characterized in that the sealing layer is formed of a material comprising a mixture of two polymer components, wherein the first component (A) consists of a polypropylene copolymer with an ethylene proportion of approximately 4 to 12 mol % and wherein the component (B) is selected from the family of
ethylene vinyl acetate copolymer with a vinyl acetate proportion of up to 18 mol %,
ionomers,
ethylene ethyl acrylate copolymers,
ethylene methyl acrylate copolymers,
polypropylenes and polyethylenes as well as ethylene vinyl acetate copolymers grafted with maleic acid anhydride.

22. Use as defined in claim 21, characterized in that the mixing ratio of the components (A) and (B) is 5:95 to 95:5.

23. Use as defined in claim 22, characterized in that the mixing ratio of the components (A) and (B) is 35:65 to 65:35.

24. Use as defined in claim 21, characterized in that the mixing ratio of the components (A) and (B) is adjusted such that a sealing temperature in the range of 145 to 155°C is obtained.

25. Use as defined in any one of claims 21 to 24, characterized in that the ethylene proportion of the component (A) is 6 to 10 mol %.

26. Use as defined in one or more of the aforementioned claims, characterized in that the puncture resistance and resistance to further tearing can be reduced in addition due to a selective increase in the cooling temperature of the cooling roller(s).

27. Use as defined in claim 26, characterized in that the cooling of the film on the cooling rollers is between 20 and 100°C.

28. Use as defined in one or more of the aforementioned claims, characterized in that an additional reduction in the puncture resistance and resistance to further tearing is achieved, in particular, by the use of the calendering process.

29. Use of a film as defined in one of claims 1 to 28 for the production of blister packs in the form of a packaging with a lower part as goods carrier adapted in its shape to the goods to be packed and an upper part.

30. Use of a film as defined in one of claims 1 to 29, characterized in that the lower part and the upper part are produced using the same plastic material.

31. Use of a film as defined in one of claims 1 to 30, characterized in that the lower part is produced from a deep-drawn film having a sealing layer according to the definition of any one of claims 21 to 25.

32. Use of the packaging as defined in any one of claims 1 to 31, characterized in that it is suitable for packing pharmaceuticals, in particular, in ampoule, capsule or tablet form.

## Revendications

1. Utilisation d'une feuille avec une matrice en polypropylène contenant une charge en forme de particules pour la préparation d'emballages en blister, la feuille étant une feuille à percer avec une résistance de percée, mesurée sur une feuille d'épaisseur 150 µm, inférieure à 450 N/mm et la matrice en polypropylène étant formée à partir d'un polypropylène hautement cristallin.

2. Utilisation selon la revendication 1, caractérisée en ce que l'on choisit la charge et la part de la charge de telle sorte que la résistance au déchirement est abaissée sous une valeur limite de 30 N.

3. Utilisation selon la revendication 1 ou 2, caractérisée en ce que la valeur de la résistance à la percée est de 100 à 200 N/mm.

4. Utilisation selon la revendication 2 ou 3, caractérisée en ce que la valeur de la résistance au déchirement est de 3 à 4 N.

5. Utilisation selon l'une quelconque des revendications 1 à 4, caractérisée en ce que la charge comprend un constituant dans la forme d'une substance inorganique et/ou organique.

6. Utilisation selon la revendication 5, caractérisée en ce que la charge comprend comme substance organique des polymères hydrocarbonés halogénés, des polyéthersulfones, de la cellulose, de la pâte à papier mécanique et/ou des matières duroplastiques.

7. Utilisation selon la revendication 5 ou 6, caractérisée en ce que le constituant inorganique contient une substance choisie parmi SiO₂, les silicates, les titanates, TiO₂, l'oxyde d'aluminium, le kaolin, le carbonate de calcium, la magnésite, MgO, l'oxyde de fer, le carbure de silicium, le nitrure de silicium, le sulfate de baryum.

8. Utilisation selon l'une quelconque des revendications précédentes, caractérisée en ce que la charge est granulaire, en forme de petites plaques, en forme de fibres ou en forme de bâtonnets.

9. Utilisation selon l'une quelconque des revendications précédentes, caractérisée en ce que la taille de particules de la charge, mesurée sur l'allongement le plus grand de la particule, est en moyenne de 5 µm à 100 µm.

10. Utilisation selon l'une quelconque des revendications précédentes, caractérisée en ce que la teneur en charge est de 5% en poids à 60% en poids

11. Utilisation selon l'une quelconque des revendications précédentes, caractérisée en ce que les particules de charge sont bien exemptes de promoteurs d'adhérence.

12. Utilisation selon l'une quelconque des revendications précédentes, caractérisée en ce que les particules de charge sont prétraitées avec un auxiliaire, lequel améliore l'aptitude à la dispersion des particules de charge dans la matrice.

13. Utilisation selon l'une quelconque des revendications précédentes, caractérisée en ce que l'épaisseur de la feuille est de 20 µm à 600 µm.

14. Utilisation selon l'une quelconque des revendications précédentes, caractérisée en ce que la feuille est bien imperméable à la vapeur d'eau.

15. Utilisation selon l'une quelconque des revendications précédentes, caractérisée en ce que le polypropylène de la matrice de matière plastique présente une part élevée en élément de pentade isotactique.

16. Utilisation selon la revendication 15, caractérisée en ce que la part en élément de pentade isotactique est comprise entre 0,955 et 1.

17. Utilisation selon l'une quelconque des revendications précédentes, caractérisée en ce que le polypropylène de la matrice en matière plastique présente un poids moléculaire moyen de 10 000 à 600 000.

18. Utilisation selon l'une ou plusieurs quelconques des revendications précédentes, caractérisée en ce que la feuille a deux ou plusieurs couches.

19. Utilisation selon la revendication 18, caractérisée en ce que les deux ou plusieurs couches de la feuille sont coextrudées.

20. Utilisation selon l'une quelconque des revendications 18 ou 19, caractérisée en ce qu'une couche de feuille se trouvant à l'extérieur est une couche de scellement.

21. Utilisation selon la revendication 20, caractérisée en ce que la couche de scellement est formée d'un matériau, lequel comprend un mélange de deux constituants polymères, le premier constituant (A) étant constitué d'un copolymère de polypropylène avec une part en éthylène d'environ 4 à 12% en mol et le constituant (B) étant choisi parmi
un copolymère EVA avec jusqu'à 18% en mol de part d'acétate de vinyle, des ionomères,
des copolymères d'éthylène-acrylate d'éthyle,
des copolymères d'éthylène-acrylate de méthyle,
des polypropylènes et des polyéthylènes ainsi que des copolymères EVA greffés avec de l'anhydride d'acide maléique.

22. Utilisation selon la revendication 21, caractérisée en ce que le rapport de mélange des constituants (A) et (B) est de 5:95 à 95:5.

23. Utilisation selon la revendication 22, caractérisée en ce que le rapport de mélange des constituants (A) et (B) est de 35: 65 à 65:35.

24. Utilisation selon la revendication 21, caractérisée en ce que le rapport de mélange des constituants (A) et (B) est ajusté de telle sorte que l'on obtient une température de scellement dans le domaine de 145 à 155°C.

25. Utilisation selon l'une quelconque des revendications 21 à 24, caractérisée en ce que la part en éthylène du constituant (A) est de 6 à 10% en mol.

26. Utilisation selon l'une ou plusieurs quelconques des revendications précédentes, caractérisée en ce que l'on peut encore abaisser la résistance à la percée et la résistance au déchirement par une augmentation ciblée de la température de refroidissement du(des) rouleau(x) de refroidissement.

27. Utilisation selon la revendication 26, caractérisée en ce que le refroidissement de la feuille sur les rouleaux de refroidissement se fait entre 20 et 100°C.

28. Utilisation selon l'une ou plusieurs quelconques des revendications précédentes, caractérisée en ce que l'on obtient une diminution supplémentaire de la résistance à la percée et au déchirement spécialement en utilisant le procédé de calandrage.

29. Utilisation d'une feuille selon l'une quelconque des revendications 1 à 28 pour la préparation d'emballages en blister dans la forme d'un emballage avec une partie inférieure de forme adaptée aux produits à emballer comme support de produits et une partie supérieure.

30. Utilisation d'une feuille selon l'une quelconque des revendications 1 à 29, caractérisée en ce que la partie inférieure et la partie supérieure sont préparées en utilisant la même matière plastique.

31. Utilisation selon l'une quelconque des revendications 1 à 30, caractérisée en ce que l'on prépare la partie inférieure à partir d'une feuille d'emboutissage profond, laquelle présente une couche de scellement selon la définition d'une des revendications 21 à 25.

32. Utilisation de l'emballage selon l'une quelconque des revendications 1 à 31, caractérisée en ce qu'elle est appropriée pour l'emballage de produits pharmaceutiques, en particulier dans la forme d'ampoules, de gélules ou de comprimés.
